(19) Europäisches Patentamt
European Patent Office
Office européen des brevets

(11) EP 4 339 004 A1

(12) EUROPEAN PATENT APPLICATION

(43) Date of publication:
20.03.2024 Bulletin 2024/12

(21) Application number: 22195416.7

(22) Date of filing: 13.09.2022

(51) International Patent Classification (IPC):
B60L 1/10 (2006.01)   H02M 1/36 (2007.01)
H02M 3/335 (2006.01)   B60L 1/12 (2006.01)
B60L 53/20 (2019.01)   B60L 53/22 (2019.01)
B60L 1/14 (2006.01)   B60L 58/20 (2019.01)
B60L 58/16 (2019.01)

(52) Cooperative Patent Classification (CPC):
B60L 1/10; B60L 1/12; B60L 1/14; B60L 53/20;
B60L 53/22; B60L 58/16; B60L 58/20; H02M 1/36;
H02M 3/1586; H02M 3/33561; H02M 3/33571;
H02M 3/33573; H02M 3/33584; B60L 2210/12;
B60L 2210/14;   (Cont.)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: MAHLE International GmbH
70376 Stuttgart (DE)

(72) Inventors:
• ESMORIS BERTOA, Antón
46010 Valencia (ES)
• GARCERA, Gabriel
46015 Valencia (ES)
• JORDÀN HERRERO, Donato
46178 La Yesa (ES)
• FIGUERES, Emilio
46980 Paterna (ES)

(74) Representative: BRP Renaud & Partner mbB
Rechtsanwälte Patentanwälte
Steuerberater
Königstraße 28
70173 Stuttgart (DE)

Remarks:
A request for correction of Fig. 9 has been filed pursuant to Rule 139 EPC. A decision on the request will be taken during the proceedings before the Examining Division (Guidelines for Examination in the EPO, A-V, 3.).

(54) **POWER CONVERSION TOPOLOGY**

(57) The invention relates to a power conversion topology (1) for charging a HV-battery (4) and/or a LV-battery (5) of an electric vehicle (2). The power conversion topology (1) comprises a three-winding transformer (8) for connection to a utility grid (3), to the HV-battery (4) and to the LV-battery (5). In addition, the power conversion topology (1) comprises a GR-rectifier (9) and a GR-capacitor (7) on the GR-side; an HV-rectifier (10), an HV-filter (11) and an HV-capacitor (12) on the HV-side; and an LV-rectifier (13) and an LV-filter (14) on the LV-side.

According to the invention, the power conversion topology (1) comprises an auxiliary inductor (15) connected between the LV-rectifier (13) and the LV-filter (14). In addition, the power conversion topology (1) comprises a blocking circuit (16) with a transformer (17) and a diode (18) connected between the auxiliary inductor (15) and the GR-capacitor (7) or the HV-capacitor (12).

The invention also relates to a method (21) for operating the power conversion topology (1).

Fig. 2

**(Cont. next page)**

(52) Cooperative Patent Classification (CPC): (Cont.)
B60L 2240/529

**Description**

The invention relates to a power conversion topology for charging a HV-battery and/or a LV-battery of an electric vehicle according to the generic term of claim 1. The invention also relates to a method for operating the power conversion topology.

An electric vehicle usually comprises an HV-battery (HV: high voltage) for supplying energy to a vehicle drive of the electric vehicle and an LV-battery (LV: low voltage) for supplying energy to other electrical consumers of the electric vehicle - for example the instrument panel and/or lamps. The HV-battery i.e. the HV-side of the electric vehicle must be electrically isolated from the LV-battery i.e. LV-side of the electric vehicle. The HV-battery is usually charged via a utility grid and the LV-battery via the HV-battery. In addition, the utility grid can be supplied with stored energy from the HV-battery i.e. the HV-battery can be discharged into the utility grid. In addition, the HV-battery can be precharged via the LV-battery. The above functions are implemented by a power conversion topology that electrically connects the utility grid, the HV-battery and the LV-battery accordingly. To realize the precharging of the HV-battery from the LV-battery in the power conversion topology, high currents must be drawn from the LV-battery. These currents can be dangerous. To be able to control or limit these currents, the power conversion topology must be implemented accordingly. However, measuring the instantaneous currents at the LV-battery i.e. at the LV-side of the electric vehicle can be very complex and cost-intensive. Accordingly, the power conversion topology is also complex and cost-intensive in design.

A power conversion topology is known, for example, from WO/2019/199964 A1.

It is therefore the object of the invention to provide an improved or at least alternative embodiment for a power conversion topology of the generic type in which the described disadvantages are overcome. It is also the object of the invention to provide a corresponding method for operating the power conversion topology.

This object is solved according to the invention by the object of the independent claims. Advantageous embodiments are the subject of the dependent claims.

A power conversion topology is provided for charging a HV-battery and/or a LV-battery of an electric vehicle. The power conversion topology comprises a three-winding transformer with a primary winding for connection to a utility grid, a secondary winding for connection to the HV-battery and a tertiary winding for connection to the LV-battery. The primary winding, the secondary winding, and the tertiary winding interact electromagnetically with each other. The power conversion topology also contains a GR-rectifier and a GR-capacitor. The GR-rectifier is connected upstream of the primary winding and the GR-capacitor is connected upstream of the GR-rectifier. The power conversion topology further comprises a HV-rectifier, a HV-filter, and a HV-capacitor. The HV-rectifier is connected downstream of the secondary winding and the HV-filter is connected downstream of the HV-rectifier. The HV-capacitor is then connected between the HV-rectifier and the HV-filter. The power conversion topology also comprises an LV-rectifier and an LV-filter. The LV-rectifier is connected downstream of the tertiary winding and the LV-filter is connected downstream of the LV-rectifier. According to the invention, the power conversion topology contains an auxiliary inductor connected between the LV-rectifier and the LV-filter. In addition, the power conversion topology contains a blocking circuit comprising a transformer and a diode. Here, the blocking circuit is connected between the auxiliary inductor and the GR-capacitor or between the auxiliary inductor and the HV-capacitor.

In the present invention, abbreviations "HV" for "high voltage" and "LV" for "low voltage" are used. An element of the power conversion topology marked with the abbreviation "HV" or "LV" is assigned to an HV-side or an LV-side of the power conversion topology, respectively. Furthermore, the abbreviation "GR" is used for "utility grid". An element of the power conversion topology marked with the abbreviation "GR" is correspondingly assigned to a GR-side i.e. a side of the power conversion topology assigned to the utility grid. It is understood that all elements of the power conversion topology are designed and interconnected to perform the functions described below. The terms "upstream" and "downstream" refer to the direction of current from the utility grid to the primary winding on the GR-side, the direction of current from the secondary winding to the HV-battery on the HV-side, and the direction of current from the tertiary winding to the LV-battery on the LV-side.

Advantageously, the power conversion topology according to the invention can be operated in a CHARGE mode, in a DRIVE mode and in a V-TO-G mode. In the CHARGE mode, the power conversion topology is connected to the utility grid and the HV-battery and the LV-battery of the electric vehicle are charged by the utility grid. In a DRIVE mode, the power conversion topology is disconnected from the utility grid and the LV-battery of the electric vehicle is charged by the HV-battery of the electric vehicle. In the V-TO-G mode, the power conversion topology is connected to the utility grid and the utility grid draws a current from the HV-battery of the electric vehicle.

The proposed blocking circuit also allows the power conversion topology according to the invention to be operated in a PRECHARGE mode. In the PRECHARGE mode, the power conversion topology is disconnected from the utility grid and the GR-capacitor and the HV-capacitor are charged by the LV-battery. Thereby, in the PRECHARGE mode, the GR-capacitor and the HV-capacitor can be first discharged by the blocking circuit within a short time, preferably less than within one second, and then recharged within a short time. To charge the GR-capacitor and the HV-capacitor, a current is drawn from the LV-battery.

The blocking circuit is connected in parallel to the GR-capacitor or to the HV-capacitor and connects the GR-side of the power conversion topology or the HV-side of the power conversion topology to the LV-side of the power conversion topology. In the blocking circuit, the transformer is connected in parallel to the auxiliary inductor. The auxiliary inductor itself may be connected in series with the LV-rectifier and the LV-filter. The diode of the blocking circuit is arranged between the transformer and the GR-capacitor or the HV-capacitor and is connected in series with the GR-capacitor or the HV-capacitor. The blocking circuit is designed and connected in the power conversion topology such that it carries a current only in the PRECHARGE mode. In the CHARGE mode, in the DRIVE mode and in the V-TO-G mode, the diode of the blocking circuit is switched off and no current is applied to the winding of the transformer of the blocking circuit assigned to the GR-side or HV-side.

In the PRECHARGE mode, a high current can be drawn from the LV-battery and peak currents can be limited. In particular, the RMS value of the current through the LV-capacitor as well as the peak value of the current through the tertiary winding of the three-winding transformer can be greatly reduced. In addition, the control of the power flows between the GR-side, the HV-side and the LV-side can be simplified.

In the power conversion topology, the three-winding transformer is used, which means that only one transformer is used compared to conventional power conversion topology. This can reduce the size and cost of the entire power conversion topology and increase the overall power density. In addition, the three-winding transformer enables galvanic isolation between the HV-side and the LV-side of the electric vehicle.

The auxiliary inductor may be a magnetizing inductance of the blocking circuit transformer and may be realized by a winding of the transformer. The GR-rectifier may be represented by a full bridge rectifier and the HV-rectifier may be represented by a full bridge rectifier. The LV-rectifier may be represented by a full-bridge boost converter or by a midpoint rectifier with two active switches.

The invention also relates to a method of operating the power conversion topology described above. The power conversion topology is thereby operable in a PRECHARGE mode, wherein in the PRECHARGE mode the power conversion topology is disconnected from the utility grid and the GR-capacitor and the HV-capacitor are discharged and subsequently charged by the LV-battery. Thereby, in the PRECHARGE mode, the GR-capacitor and the HV-capacitor are first fully discharged and then charged with the current drawn from the LV-battery. The GR-rectifier and the HV-rectifier can thereby be controlled in the PRECHARGE mode to operate as diode rectifiers. The PRECHARGE mode can be carried out in particular before the DRIVE mode.

In the power conversion topology, the characteristics of the blocking circuit transformer and the three-winding transformer can be matched to each other. A turns number of the primary winding, a turns number of the secondary winding and a turns number of the tertiary winding of the three-winding transformer can be predetermined as a function of the turns ratio of the blocking circuit transformer. If the blocking circuit is connected between the auxiliary inductor and the GR-capacitor, the turns ratio of the transformer of the blocking circuit may correspond to a ratio of the turns number of the primary winding and the turns number of the tertiary winding. If the blocking circuit is connected between the auxiliary inductor and the HV-capacitor, the turns ratio of the transformer of the blocking circuit may correspond to a ratio of the turns number of the secondary winding and the turns number of the tertiary winding. In this case, the turns ratio of the transformer is determined by a ratio of a turns number of a winding facing the GR-side or HV-side and a turns number of a winding facing the LV-side. The turns number of the winding facing the LV-side can be used as a reference turns number. If the reference turns number is given, the turns number of the winding facing the GR-side or HV-side i.e. the winding ratio of the transformer can be determined. Based on it, the turns number of the primary winding and/or the turns number of the secondary winding and/or the turns number of the tertiary winding of the three-winding transformer can be determined. The exact turns number of the winding of the transformer facing the LV-side i.e. the reference turn number is left to those skilled in the art.

In a preferred embodiment of the power conversion topology, the LV-rectifier is represented by a midpoint rectifier with two active switches. As discussed above, the GR-rectifier and the HV-rectifier may each be represented by a full bridge rectifier. In this case, the PRECHARGE mode contains a BUCK mode, where in the BUCK mode, the two switches of the LV-rectifier are operated in a complementary manner with a duty cycle between 0 and 0.5 i.e. between 0% and 50% in each case. As soon as one of the two switches is switched on, the diode of the blocking circuit is switched off and the GR-capacitor and the HV-capacitor are charged. As soon as both switches are switched off, the diode of the blocking circuit is switched on and the GR-capacitor or HV-capacitor is charged. Whether the GR-capacitor or the HV-capacitor is charged depends on the design of the power conversion topology. If the blocking circuit is connected between the auxiliary inductor and the GR-capacitor, the HV-capacitor is charged in one time interval and the GR-capacitor is charged in both time intervals. If the blocking circuit is connected between the auxiliary inductor and the HV-capacitor, the GR-capacitor is charged in one time interval and the HV-capacitor is charged in both time intervals. The current flowing in the center tap of the LV-rectifier is thereby discontinuous and can practically be a pulsed current at a high power.

If the blocking circuit is connected between the auxiliary inductor and the GR-capacitor, a maximum voltage applied to the GR-capacitor in the BUCK mode of the PRECHARGE mode corresponds to a product of the ratio of the turns number of the primary winding and the turns number of the tertiary winding and a voltage provided by the LV-battery. A voltage applied to the GR-capacitor is then equal to twice the product of the maximum voltage applied to the GR-capacitor and the duty cycle. If the blocking circuit is connected between the auxiliary inductor and the HV-capacitor, a maximum voltage applied to the HV-capacitor in the BUCK mode of the PRECHARGE mode corresponds to a product of the ratio of the turns number of the secondary winding and the turns number of the tertiary winding and a voltage provided by the LV-battery. A voltage applied to the HV-capacitor then corresponds to a double product of the maximum voltage applied to the HV-capacitor and the duty cycle.

In addition, it may be provided that in the BUCK mode of the PRECHARGE mode, a PCMC controller (PCMC: peak current mode control) is used to control a current flowing in a center tap of the LV-rectifier i.e. the midpoint rectifier. The PCMC controller contains a PCMC circuit and a signal generator circuit. The signal generator circuit thereby contains a GR-AC current transformer and a HV-AC current transformer. The GR-AC current transformer is connected between the GR-rectifier and the primary winding, and the HV-AC current transformer is connected between the secondary winding and the HV-rectifier. Here, the signal generator circuit synthesizes a voltage signal for the PCMC circuit in the form of the current flowing in the center tap of the midpoint rectifier from alternating currents at the two HV-AC current transformers. Then, the PCMC circuit generates voltage signals to control the switches of the LV-rectifier i.e. the midpoint rectifier based on the synthesized voltage signal. The signal generator circuit may contain other components - for example, RF current rectifiers (RF: High Frequency) and resistors.

The current flowing in the center tap contains high peak values and its measurement can be complex. Through PCMC controller, the current flowing in the center tap of the LV-rectifier i.e. the midpoint rectifier can be reconstructed from the alternating currents at the two AC current transformers. The currents at the two AC current transformers are comparatively small and thus the current flowing in the center tap can be measured in a comparatively simplified manner. This eliminates the need for expensive components required to measure the current flowing in the center tap, thereby reducing the cost of the power conversion topology.

Alternatively, a differently designed PCMC controller can be used to control a current flowing in a center tap of the LV-rectifier i.e. the midpoint rectifier in the BUCK mode of the PRECHARGE mode. In this regard, the PCMC controller may include a PCMC circuit and a signal generator circuit. The signal generator circuit then comprises a GR-current transformer connected between the GR-capacitor and the GR-rectifier, and an HV-current transformer connected between the HV-rectifier and the HV-capacitor. The signal generator circuit can then synthesize a voltage signal in the form of the current flowing in the center tap of the LV-rectifier i.e. midpoint rectifier from demagnetized currents at the two current transformers, and the PCMC circuit can then generate voltage signals for controlling the switches of the LV-rectifier i.e. the midpoint rectifier from the synthesized voltage signal. The signal generator circuit may also include other components - for example, resistors or diodes. Analogous to the PCMC controller embodiment described above, the current flowing in the center tap of the LV-rectifier i.e. midpoint rectifier can be reconstructed here from the currents at the two current transformers. Since the currents at the two current transformers are small compared to the current flowing in the center tap, effort and cost can be reduced.

In addition, the PCMC controller may include a proportional-integral controller. The proportional-integral controller can then generate a control voltage signal between a measured voltage value of the HV-capacitor and a predetermined desired voltage value of the HV-capacitor. Based on the control voltage signal, the PCMC circuit can then generate the voltage signals to control the switches of the LV-rectifier i.e. the midpoint rectifier. The proportional-integral controller can be implemented with analog circuits or digitally.

In addition, it can be provided that a health test of the LV-battery is carried out in the PRECHARGE mode. In the health test, a current can be drawn from the LV-battery by the PCMC controller and regulated to the required value. The current is sampled and evaluated over a predetermined time interval. Based on this evaluation, the health status of the LV-battery can be assessed. Advantageously, the health test can be carried out in the PRECHARGE mode with the PCMC controller without further additional components.

In a preferred embodiment of the power conversion topology, the LV-rectifier is represented by a midpoint rectifier with two active switches. The PRECHARGE mode then contains a BOOST mode, where in the BOOST mode, the two switches are operated in a complementary manner with a duty cycle between 0.5 and 1 i.e. between 50% and 100% in each case. In the BOOST mode, the two switches can be driven with a phase shift of 180° and a time overlap. As soon as one of the two switches is switched on, the GR-capacitor and the HV-capacitor are charged. As soon as two switches are switched off, partial turns of the tertiary winding formed by a center tap of the LV-rectifier are short-circuited and the GR-capacitor and HV-capacitor are not charged. The BOOST mode may be required if a voltage on the GR-capacitor or on the HV-capacitor should be reached which is higher than the maximum voltage on the GR-capacitor or HV-capacitor achievable in the BUCK mode of the PRECHARGE mode. The current flowing in the center tap of the LV-rectifier i.e. the midpoint rectifier is continuous and may be of a triangular shape.

Additionally, it may be provided that in the BOOST mode of the PRECHARGE mode, an ACMC controller (ACMC: Average Current Mode Control) is used to control a current flowing in a center tap of the midpoint rectifier. The ACMC controller can thereby operates with a current provided by the LV-battery. Voltage signals to control the switches of the LV-rectifier i.e. the midpoint rectifier may be generated from the named current. The current provided by the LV-battery is thereby approximately a direct current.

As explained above, the power conversion topology can also be operated in a CHARGE mode, in a DRIVE mode, and in a V-TO-G mode. In the CHARGE mode, the power conversion topology is connected to the utility grid. In the CHARGE mode, the HV-battery and the LV-battery of the electric vehicle are charged by the utility grid. In the DRIVE mode, the power conversion topology is disconnected from the utility grid and the LV-battery of the electric vehicle is charged by the HV-battery of the electric vehicle. In the V-TO-G mode, the power conversion topology is connected to the utility grid and the utility grid draws a current from the HV-battery of the electric vehicle. The blocking circuit can be designed and connected in the power conversion topology in such a way that it carries a current only in the PRECHARGE mode. In the CHARGE mode, in the DRIVE mode and in the V-TO-G mode, the diode of the blocking circuit is switched off and no current is applied to the winding of the transformer facing the GR-side or the HV-side.

Further important features and advantages of the invention are apparent from the subclaims, from the drawings, and from the accompanying figure description based on the drawings.

It is understood that the above features and those to be explained below can be used not only in the combination indicated in each case, but also in other combinations or on their own, without departing from the scope of the present invention.

Preferred embodiments of the invention are shown in the drawings and will be explained in more detail in the following description, wherein identical reference signs refer to identical or similar or functionally identical components.

It shows, each schematically

Fig. 1    a circuit diagram of a power conversion topology according to the invention in an electric vehicle;

Fig. 2    a circuit diagram of the power conversion topology according to the invention in a first embodiment;

Fig. 3    a circuit diagram of the power conversion topology according to the invention in the first embodiment in a PRECHARGE mode;

Fig. 4    a circuit diagram of the power conversion topology according to the invention in the first embodiment in PRECHARGE mode with a signal generator circuit of a PCMC controller;

Fig. 5    a circuit diagram of the power conversion topology according to the invention in the first embodiment in a PRECHARGE mode with a deviating signal generator circuit of the PCMC controller;

Fig. 6    a circuit diagram of a PCMC circuit of the PCMC controller of Fig. 4 and Fig. 5;

Fig. 7    a circuit diagram of the PCMC controller with a different signal generator circuit;

Fig. 8    a circuit diagram of the PCMC controller of Fig. 7 during a health test;

Fig. 9    a circuit diagram of the power conversion topology according to the invention in a second embodiment in the PRECHARGE mode.

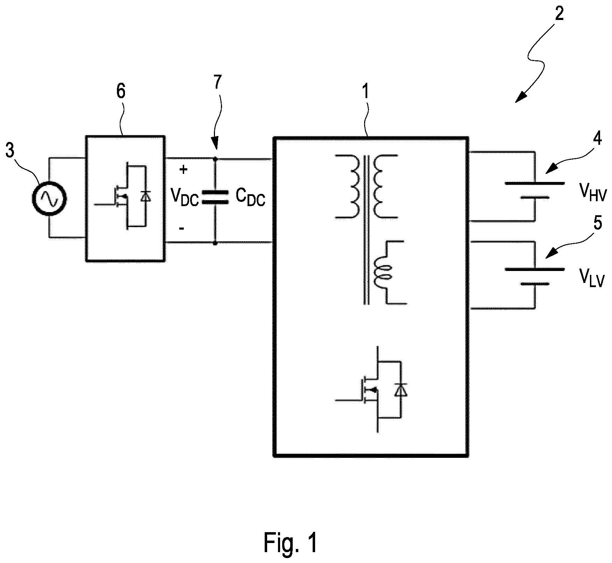

Fig. 1 shows a circuit diagram of a power conversion topology 1 according to the invention in an electric vehicle 2. Here, the power conversion topology 1 is electrically connected to a utility grid 3, to an HV-battery 4 of the electric vehicle 2 and to an LV-battery 5 of the electric vehicle 2. A PFC filter 6 (PFC: power factor correction) is connected between the utility grid 3 and the power conversion topology 1. In addition, a GR-capacitor 7 is connected downstream of the PFC filter 6. The utility grid 3, the PFC filter 6, the HV-battery 4 and the LV-battery 5 are not part of the power conversion topology 1 according to the invention. Furthermore, the utility grid 3 is not part of the electric vehicle 2.

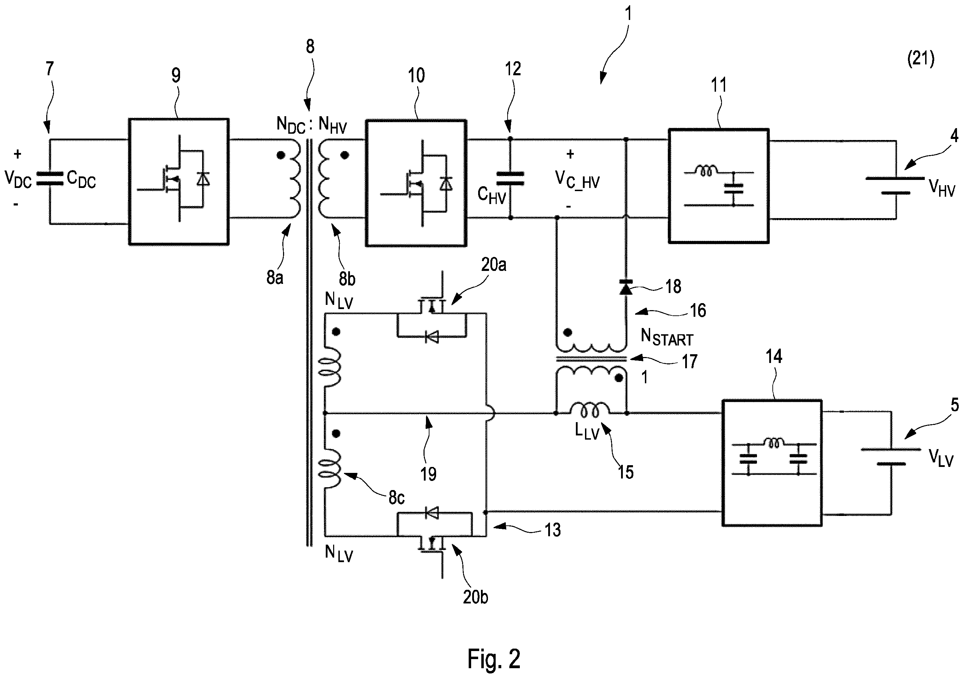

Fig. 2 shows a circuit diagram of the power conversion topology 1 according to the invention in a first embodiment. Here, the power conversion topology 1 contains a three-winding transformer 8 with a primary winding 8a for connection to the utility grid 3, a secondary winding 8b for connection to the HV-battery 4 and a tertiary winding 8c for connection to the LV-battery 5. The primary winding 8a, the secondary winding 8b, and the tertiary winding 8c electromagnetically interact with each other. As explained above, the HV-battery 4 and the LV-battery 5 are not part of the power conversion topology 1 according to the invention.

The power conversion topology 1 comprises a GR-rectifier 9 and the GR-capacitor 7. The GR-rectifier 9 is connected upstream of the primary winding 8a, and the GR-capacitor 7 is connected upstream of the GR-rectifier 9. The power conversion topology 1 further comprises a HV-rectifier 10, a HV-filter 11, and a HV-capacitor 12. The HV-rectifier 10 is connected downstream of the secondary winding 8b, and the HV-filter 11 is connected downstream of the HV-rectifier 10. The HV-capacitor 11 is connected between the HV-rectifier 10 and the HV-filter 12. The HV-rectifier 10, the HV-filter 11 and the HV-capacitor 12 are thereby connected in parallel. The power conversion topology 1 also contains an LV-rectifier 13 and an LV-filter 14. The LV-rectifier 13 is connected downstream of the tertiary winding 8b, and the LV-filter 14 is connected downstream of the LV-rectifier 13. An auxiliary inductor 15 is connected between the LV-rectifier 13 and the LV-filter 14 in series therewith.

In addition, the power conversion topology 1 contains a blocking circuit 16 with a transformer 17 and a diode 18. Here, the blocking circuit 16 is connected between the auxiliary inductor 15 and the HV-capacitor 12. Alternatively, the blocking circuit 16 can also be connected between the auxiliary inductor 15 and the GR-capacitor 7. In the following, however, only the shown connection of the blocking circuit 16 will be discussed.

In the first embodiment of the power conversion topology 1, the GR-rectifier 9 and the HV-rectifier 10 are each represented by a full bridge rectifier. The LV-rectifier 13 is represented by a midpoint rectifier with a center tap 19 and two active switches 20a and 20b. The HV-filter 11 and the LV-filter 14 are realized in a manner known to those skilled in the art.

In the power conversion topology 1, the GR-capacitor 7 has a voltage V_DC, the HV-capacitor 12 has a voltage V_C_HV, the HV-battery 4 has a voltage V_HV, and the LV-battery 5 has a voltage V_LV. The auxiliary inductor 15 has an inductance L_LV, the GR-capacitor 7 has a capacitance C_DC, and the HV-capacitor 12 has a capacitance C_HV.

The primary winding 8a has a turns number N_DC and the secondary winding 8b has a turns number N_HV. Due to the structure of the LV-rectifier 13, the tertiary winding 8c is divided into two partial windings each have a turns number N_LV. Here, a turns number of a LV-sided winding of the transformer 17 is a reference turns number and is set equal to one. However, it is understood that this may be arbitrary. A turns number of a HV-sided winding of the transformer 17 is N_START. Accordingly, the transformer 17 has a winding ratio N_TRANS equal to N_START/1.

The characteristics of the transformer 17 of the blocking circuit 16 and of the three-winding transformer 8 are matched to each other. The following relationship applies:

$$N\_TRANS = N\_START/1 = N\_HV/N\_LV.$$

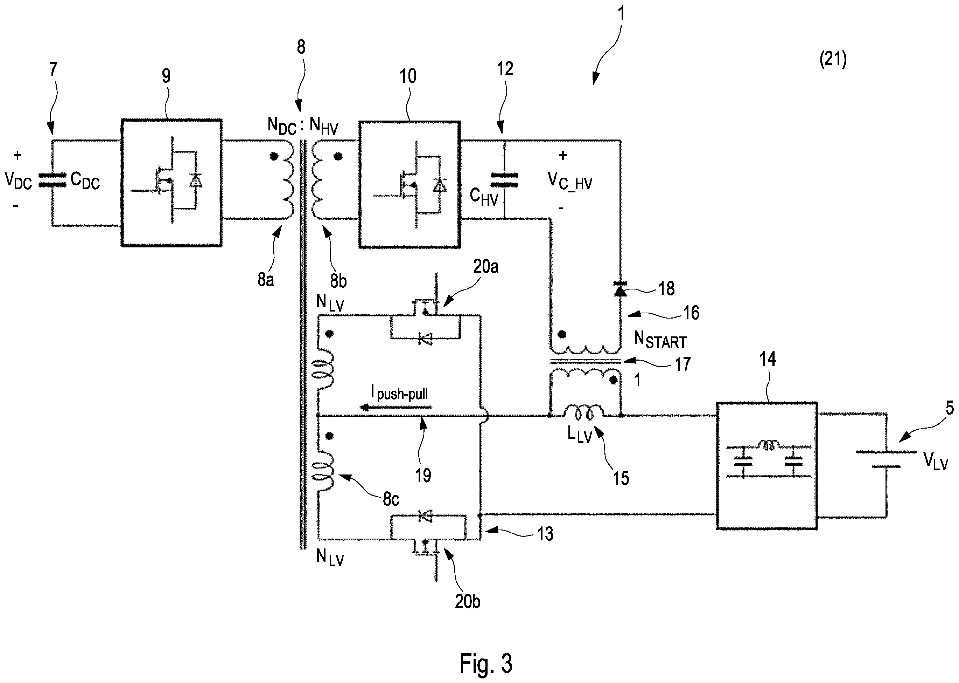

In a method 21 according to the invention, the power conversion topology 1 can be operated in a CHARGE mode, in a DRIVE mode, in a V-TO-G mode and in a PRECHARGE mode. In the CHARGE mode, the power conversion topology 1 is connected to the utility grid 3. In this case, the HV-battery 4 and the LV-battery 5 of the electric vehicle 2 are charged by the utility grid 3. In the DRIVE mode, the power conversion topology 1 is disconnected from the utility grid 3 and the LV-battery 5 is charged by the HV-battery 4 of the electric vehicle 2. In the V-TO-G mode, the power conversion topology 1 is connected to the utility grid 3 and the utility grid 3 draws a current from the HV-battery 4 of the electric vehicle 2. In the PRECHARGE mode, the power conversion topology 1 is disconnected from the utility grid 3 and the GR-capacitor 7 and the HV-capacitor 12 are charged with a current i_LV_batt provided by the LV-battery 5. The PRECHARGE mode of method 21 will be explained in more detail below with reference to Figs. 3-9.

Fig. 3 shows a circuit diagram of the power conversion topology 1 according to the invention in the first embodiment in the PRECHARGE mode. In the PRECHARGE mode, the power conversion topology 1 is disconnected from the utility grid 3 and the GR-capacitor 7 and the HV-capacitor 12 are charged by the LV-battery 5. For clarity, the components not used in the PRECHARGE mode - here HV-filter 11 and the HV-battery 5 - are hidden. In the PRECHARGE mode, a BUCK mode and a BOOST mode can be executed.

In the BUCK mode, the two switches 20a and 20b of the LV-rectifier 13 are operated in a complementary manner with a duty cycle D between 0% and 50% in each case. As soon as one of the two switches 20a or 20b is switched on, the diode 18 of the blocking circuit 16 is switched off. Current flows from the LV-battery 5 through the LV-filter 14 and the auxiliary inductor 15 to the center tap 19 and through one of the partial turns of the tertiary winding 8c. The current is further passed through the GR-rectifier 7 and the HV-rectifier 10, where the GR-rectifier 7 and the HV-rectifier 10 operate as simple diode rectifiers. Here, the GR-capacitor 7 and the HV-capacitor 12 are charged. As soon as the two switches 20a, 20b are switched off, the diode 18 is switched on and no current flows into the center tap 19. As a result, a high current flows to charge the HV-capacitor 12.

The HV-capacitor 12 is charged in both time intervals and the GR-capacitor is charged in only one of the time intervals. If the turns numbers N_DC and N_HV are nearly equal, the HV-capacitor 12 is charged faster than the GR-capacitor 7, even if the capacitance C_HV of the HV-capacitor 12 is much higher than the capacitance C_DC of the GR-capacitor 7. Here, the following relationship applies to the voltage V_C_HV and the maximum voltage V_C_HV_max on the HV-capacitor 12:

$$V\_C\_HV = 2 \cdot N\_HV/N\_LV \cdot D \cdot V\_LV$$

$$V\_C\_HV\_max = N\_HV/N\_LV \cdot V\_LV$$

The current i_push_pull in the center tap 19 is discontinuous in BUCK mode. At high power, it is practically a pulsed current.

In the BOOST mode, the switches 20a and 20b are controlled with a duty cycle D between 50% and 100% in each case and thus with a phase shift of 180° and a time overlap. The BOOST mode can be used to achieve a voltage V_C_HV greater than the maximum voltage V_C_HV_max achievable in the BUCK mode. When both switches 20a and 20b are switched on, the partial turns of the tertiary turn 8c are short-circuited and no current flows to the GR-capacitor 7 and the HV-capacitor 12. As soon as one of the two switches 20a, 20b is switched on, currents are flowing to the GR-capacitor 7 and the HV-capacitor 12 via the GR-rectifier 9 and the HV-rectifier 10 and they are charged. The GR-rectifier 9 and the HV-rectifier 10 then operate as simple diode rectifiers. The current i_push_pull in the center tap 19 is continuous and may be of a triangular shape.

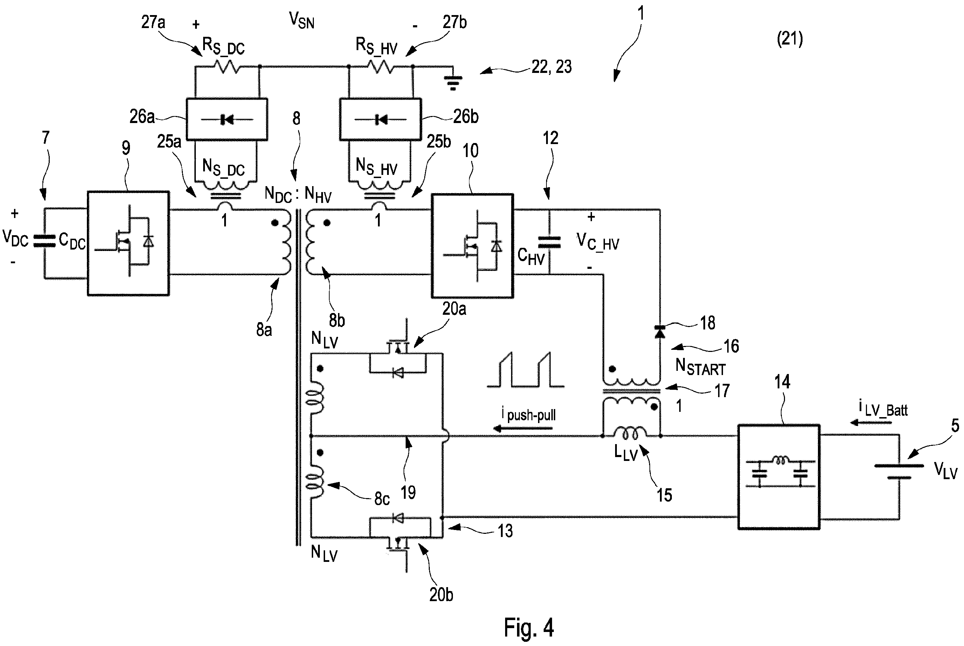

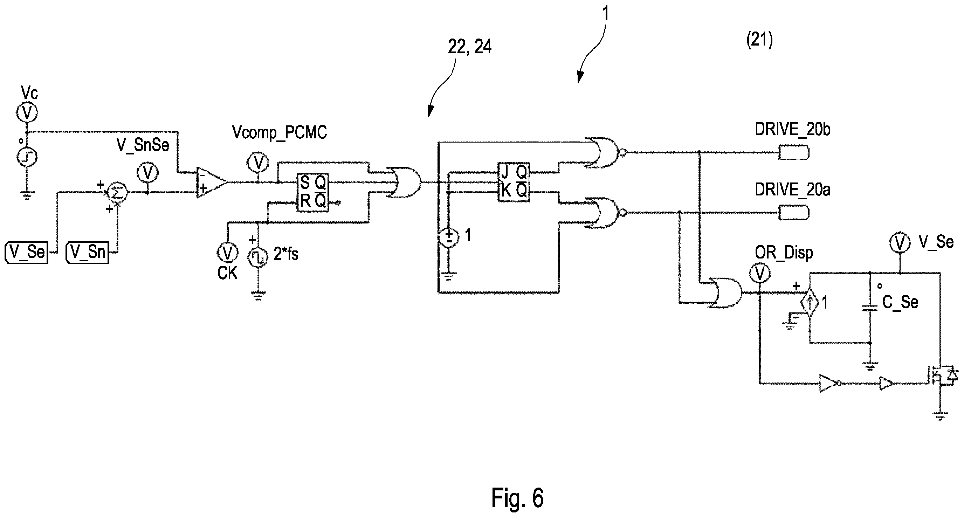

Fig. 4 shows a circuit diagram of the power conversion topology 1 according to the invention in the first embodiment in the BUCK mode of the PRECHARGE mode with a PCMC controller 22. For clarity, the components not used in the PRECHARGE mode - here HV-filter 11 and the HV-battery 5 - are hidden. In Fig. 4, only a signal generator circuit 23 of the PCMC controller 22 is shown. A PCMC circuit 24 of the PCMC controller 22 is shown in Fig. 6. Here, the signal generator circuit 23 includes a GR-AC current transformer 25a which is connected between the GR-rectifier 9 and the primary winding 8a and has a turns ratio N_DC/1. In addition, the signal generator circuit 23 includes a HV-AC current transformer 25b which is connected between the secondary winding 8b and the HV-rectifier 10 and has a turns ratio N_HV/1. On the GR-side, the signal generator circuit 23 comprises an RF current rectifier 26a and a resistor 27a having a resistance value R_DC. The RF current rectifier 26a and the resistor 27a are connected in parallel with the GR-AC current transformer 25a. On the HV-side, the signal generator circuit 23 comprises a RF current rectifier 26b and a resistor 27b having a resistance value R_HV. The RF current rectifier 26b and the resistor 27b are connected in parallel with the HV-AC current transformer 25b. The signal generator circuit 23 thereby synthesizes a voltage signal V_SN for the PCMC circuit 24 in Fig. 6 in the form of the current i_push_pull flowing in the center tap 19 from alternating currents at the two AC current transformers 25a and 25b.

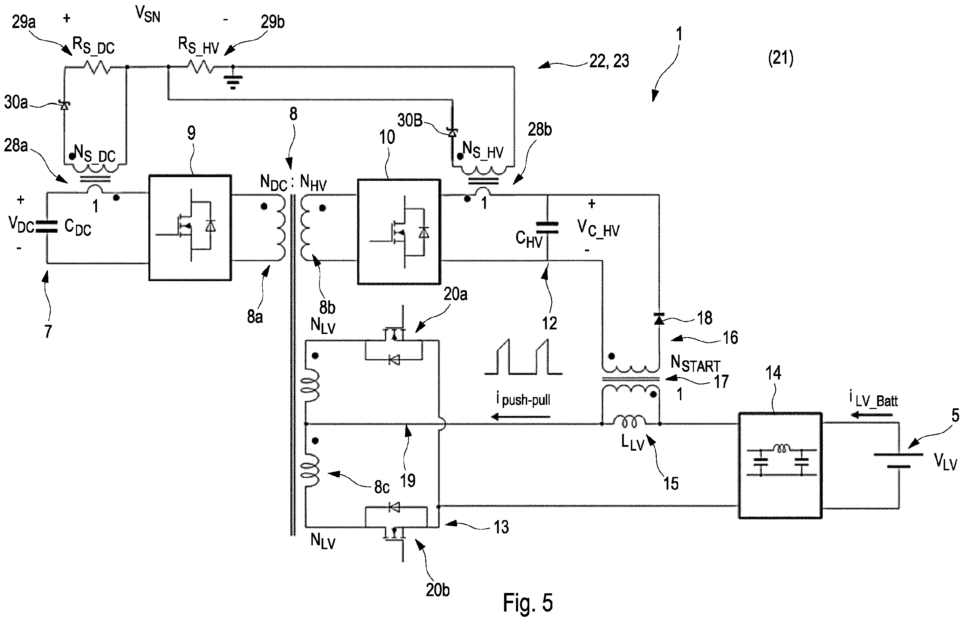

Fig. 5 shows a circuit diagram of the power conversion topology 1 according to the invention in the first embodiment in the BUCK mode of the PRECHARGE mode with the deviated signal generator circuit 23 of the PCMC controller 22. For clarity, the components not used in the PRECHARGE mode - here HV-filter 11 and the HV-battery 5 - are hidden. Here, the signal generator circuit 23 includes a GR-current converter 28a connected between the GR-capacitor 7 and the GR-rectifier 9 and having a turns ratio N_S_DC/1, and a HV-current converter 28b connected between the HV-rectifier 10 and the HV-capacitor 12 and having a turns ratio N_S_HV/1. In addition, the signal generator circuit 23 contains two resistors 29a and 29b and two diodes 30a and 30b. Here, the resistors 29a and 29b have resistance values R_S_DC and R_S_HV, respectively. The signal generator circuit 23 synthesizes the voltage signal V_SN for the PCMC circuit 23 in the form of the current i_push_pull flowing in the center tap 19 from demagnetized currents at the two current transformers 28a and 28b.

Fig. 6 shows a circuit diagram of the PCMC circuit 24 of the PCMC controller 22 of Fig. 4 and Fig. 5. Here, V_SE represents an external stabilization ramp voltage signal added to stabilize the voltage signal V_SN. This may be necessary especially due to a large variation of the voltage V_C_HV in the PRECHARGE mode. The voltage signal V_C is a control voltage that limits a momentary value of the combined voltage signals V_SN and V_SE. The PCMC circuit 24 generates voltage signals DRIVE_20a and DRIVE_20b to control the switches 20a and 20b of the LV-rectifier 13. With a suitable waveform of the voltage signal V_C, the current i_push_pull flowing in the center tap 19 and the currents at the switches 20a and 20b of the LV-rectifier 13 can be limited in the BUCK mode of the PRECHARGE mode.

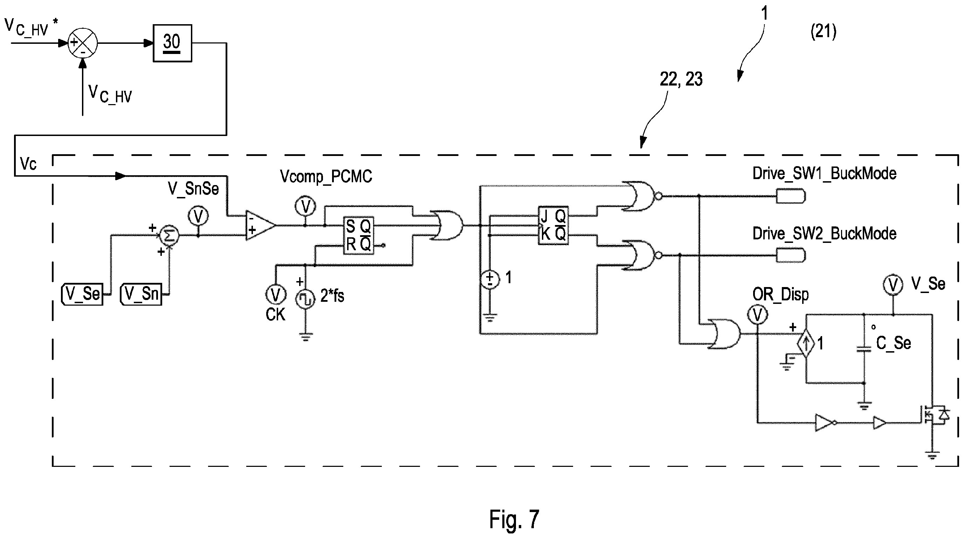

Fig. 7 shows a circuit diagram of the PCMC controller 22 with a proportional-integral controller 31. The proportional-integral controller 31 generates the voltage signal V_C for the PCMC circuit 24, which is between a measured voltage value V_C_HV of the HV-capacitor 12 and a predetermined target voltage value V_C_HV* of the HV-capacitor 12. The proportional-integral controller 31 may be implemented with analog circuitry or digitally.

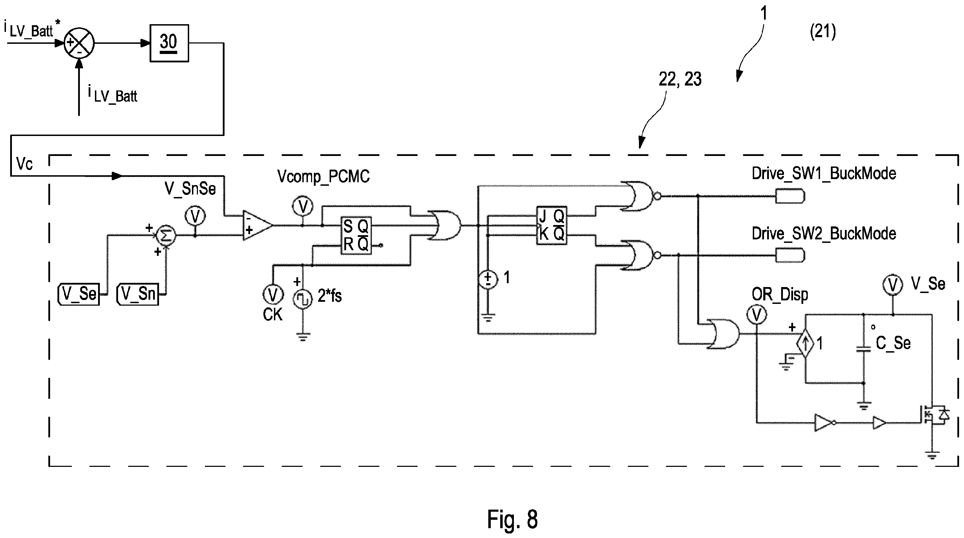

Fig. 8 shows a circuit diagram of the PCMC controller 22 of Fig. 7 during a health test. In the health test, a current i_LV_batt is drawn from LV-battery 4 and the health status of LV-battery 4 is checked. For this purpose, already existing PCMC controller 22 is used so that the health test can be performed in the BUCK mode of the PRECHARGE mode without additional components.

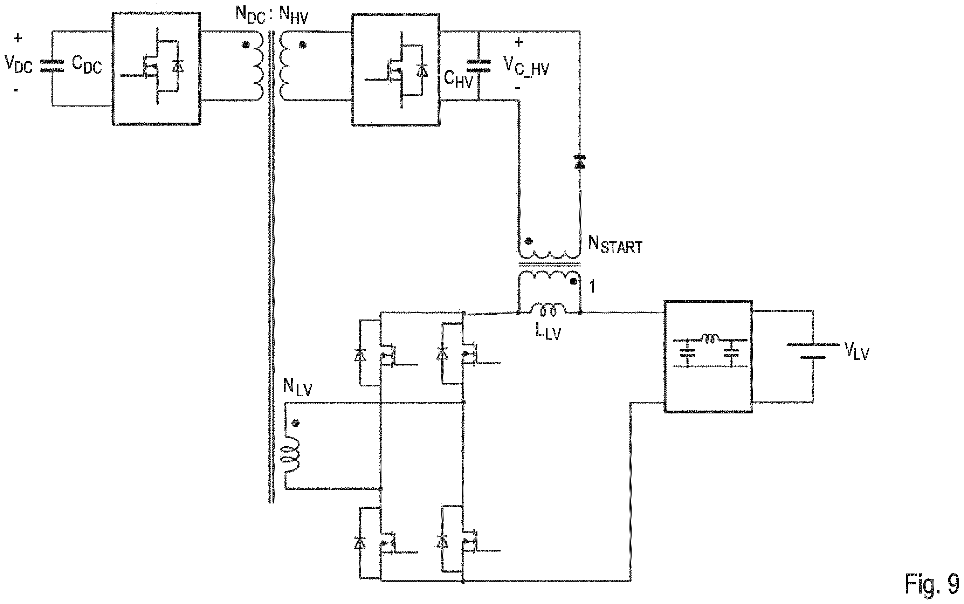

Fig. 9 shows a circuit diagram of the power conversion topology 1 according to the invention in a second embodiment in the PRECHARGE mode. For clarity, the components not used in the PRECHARGE mode - here HV-filter 11 and the HV-battery 5 - are hidden. Deviating from the first embodiment of the power conversion topology 1, the LV-rectifier 13 is designed here as a full-bridge boost converter.

**Claims**

1. Power conversion topology (1) for charging a HV-battery (4) and/or a LV-battery (5) of an electric vehicle (2),

     - wherein the power conversion topology (1) comprises a three-winding transformer (8) having a primary winding (8a) for connection to a utility grid (3), a secondary winding (8b) for connection to the HV-battery (4), and a tertiary winding (8c) for connection to the LV-battery (5),
     - wherein the power conversion topology (1) comprises a GR-rectifier (9) connected upstream of the primary winding (8a) and a GR-capacitor (7) connected upstream of the GR-rectifier (9);

- wherein the power conversion topology (1) comprises an HV-rectifier (10) connected downstream of the secondary winding (8b), an HV-filter (11) connected downstream of the HV-rectifier (10), and an HV-capacitor (12) connected between the HV-rectifier (10) and the HV-filter (10);

- wherein the power conversion topology (1) comprises an LV-rectifier (13) connected downstream of the tertiary winding (8c) and an LV-filter (14) connected downstream of the LV-rectifier (13);

**characterized in**

- **that** the power conversion topology (1) comprises an auxiliary inductor (15) connected between the LV-rectifier (13) and the LV-filter (14), and
- **in that** the power conversion topology (1) comprises a blocking circuit (16) with a transformer (17) and a diode (18), the blocking circuit (16) being connected between the auxiliary inductor (15) and the GR-capacitor (7) or between the auxiliary inductor (15) and the HV-capacitor (12).

2. Power conversion topology according to claim 1,
   **characterized in**
   **that** the auxiliary inductor (15) is a magnetizing inductance of the transformer (17) of the blocking circuit (16) and is realized by a winding of the transformer (17).

3. Power conversion topology according to claim 1 or 2,
   **characterized in**

   - **that** the GR-rectifier (9) is represented by a full-bridge rectifier and/or the HV-rectifier (10) is represented by a full-bridge rectifier, and/or
   - **that** the LV-rectifier (13) is represented by a full-bridge boost converter or by a midpoint rectifier with two active switches (20a, 20b).

4. Method (21) for operating the power conversion topology (1) according to any one of the preceding claims,
   **characterized in**
   **that** the power conversion topology (1) is operable in a PRECHARGE mode, wherein in the PRECHARGE mode the power conversion topology (1) is disconnected from the utility grid (3) and the GR-capacitor (7) and the HV-capacitor (12) are discharged and subsequently charged by the LV-battery (5).

5. Method of claim 4,
   **characterized in**

   - **that** a turns number (N_DC) of the primary winding (8a), a turns number (N_HV) of the secondary winding (8b) and a turns number (N_LV) of the tertiary winding (8c) of the three-winding transformer (8) are predetermined as a function of the turns ratio (N_TRANS) of the transformer (17) of the blocking circuit (16), and
   - **that**, if the blocking circuit (16) is connected between the auxiliary inductor (15) and the GR-capacitor (7), the turns ratio (N_TRANS) of the transformer (17) of the blocking circuit (16) corresponds to a ratio of the turns number (N_DC) of the primary winding (8a) and the turns number (N_LV) of the tertiary winding (8c), or
   - **that**, if the blocking circuit (16) is connected between the auxiliary inductor (15) and the HV-capacitor (12), the turns ratio (N_TRANS) of the transformer (17) of the blocking circuit (16) corresponds to a ratio of the turns number (N_HV) of the secondary winding (8b) and the turns number (N_LV) of the tertiary winding (8c).

6. Method according to claim 4 or 5,
   **characterized in**

   - **that** the LV-rectifier (13) is represented by a midpoint rectifier with two active switches (20a, 20b),
   - **that** the PRECHARGE mode contains a BUCK mode, wherein in the BUCK mode, the two switches (20a, 20b) are operated in a complementary manner with a duty cycle (D) greater than 0 and less than 0.5 in each case,
   - **that**, as soon as one of the two switches (20a, 20b) is switched on, the diode (18) of the blocking circuit (16) is switched off and the GR-capacitor (7) and the HV-capacitor (12) are charged, and
   - **that**, as soon as the two switches (20a, 20b) are switched off, the diode (18) of the blocking circuit (16) is switched on and the GR-capacitor (7) or HV-capacitor (12) is charged.

7. Method according to claims 5 and 6,
   **characterized in**

   - **that**, if the blocking circuit (16) is connected between the auxiliary inductor (15) and the GR-capacitor (7), in the BUCK mode of the PRECHARGE mode, a maximum voltage (V_C_DC_max) applied to the GR-capacitor (7) corresponds to a product of the ratio of the turns number (N_DC) of the primary winding (8a) and the turns number (N_LV) of the tertiary winding (8c) and a voltage (V_LV) provided by the LV-battery (5), and
- **that**, if the blocking circuit (16) is connected between the auxiliary inductor (15) and the HV-capacitor (12), in the BUCK mode of the PRECHARGE mode, a maximum voltage (V_C_HV_max) applied to the HV-capacitor (12) corresponds to a product of the ratio of the turns number (N_HV) of the secondary winding (8b) and the turns number (N_LV) of the tertiary winding (8c) and a voltage (V_LV) provided by the LV-battery (5).

8. Method according to claims 5 and 6, **characterized in**

    - **that**, if the blocking circuit (16) is connected between the auxiliary inductor (15) and the GR-capacitor (7), in the BUCK mode of the PRECHARGE mode, a voltage (V_C_DC) applied to the GR-capacitor (7) corresponds to a double product of a maximum voltage (V_C_DC_max) applied to the GR-capacitor (7) and the duty cycle (D), and
    - **that**, if the blocking circuit (16) is connected between the auxiliary inductor (15) and the HV-capacitor (12), in the BUCK mode of the PRECHARGE mode, a voltage (V_C_HV) applied to the HV-capacitor (12) corresponds to a double product of a maximum voltage (V_C_HV_max) applied to the HV-capacitor (12) and the duty cycle (D).

9. Method according to any one of claims 6 to 8, **characterized in**

    - **that** in the BUCK mode of the PRECHARGE mode, a PCMC controller (22) is used to control a current (i_push_pull) flowing in a center tap (19) of the LV-rectifier (13),
    - **that** the PCMC controller (22) comprises a signal generator circuit (23) and a PCMC circuit (24),
    - **that** the signal generator circuit (23) comprises a GR-AC current transformer (25a) connected between the GR-rectifier (9) and the primary winding (8a) and a HV-AC current transformer (25b) connected between the secondary winding (8b) and the HV-rectifier (10), and
    - **in that** the signal generator circuit (23) synthesizes for the PCMC circuit (24) a voltage signal (V_NS) in the form of the current (i_push_pull) flowing in the center tap (19) of the LV-rectifier (13) from currents at the two AC current transformers (25a, 25b), and
    - **that** the PCMC circuit (24) generates voltage signals (DRIVE_20a, DRIVE_20b) for controlling the switches (20a, 20b) of the LV-rectifier (13) based on the synthesized voltage signal (V_SN).

10. Method according to any one of claims 6 to 8, **characterized in**

    - **that** in the BUCK mode of the PRECHARGE mode, a PCMC controller (22) is used to control a current (i_push_pull) flowing in a center tap (19) of the LV-rectifier (13),
    - **that** the PCMC controller (22) comprises a signal generator circuit (23) and a PCMC circuit (24),
    - **that** the signal generator circuit (23) comprises a GR-current transformer (28a) connected between the GR-capacitor (7) and the GR-rectifier (9) and a HV-current transformer (28b) connected between the HV-rectifier (10) and the HV-capacitor (12), and
    - **in that** the signal generator circuit (23) synthesizes a voltage signal (V_NS) in the form of the current (i_push_pull) flowing in the center tap (19) of the LV-rectifier (13) from demagnetized currents at the two current transformers (28a, 28b), and
    - **that** the PCMC circuit (24) generates voltage signals (DRIVE_20a, DRIVE_20b) for controlling the switches (20a, 20b) of the LV-rectifier (13) based on the synthesized voltage signal (V_SN).

11. Method according to claim 9 or 10, **characterized in**

    - **that** the PCMC controller (22) contains a proportional-integral controller (31) which generates a control voltage signal (V_C) between a measured voltage value (V_C_HV) of the HV-capacitor (12) and a predetermined desired voltage value (V_C_HV*) of the HV-capacitor (12), and
    - **that** the PCMC circuit (24) generates the voltage signals (DRIVE_20a, DRIVE_20b) for controlling the switches (20a, 20b) of the LV-rectifier (13) based on the control voltage signal (V_C).

12. Method of any one of claims 9 to 11, **characterized in**

    - **that** a health test of the LV-battery (5) is performed in the PRECHARGE mode,
    - **that** in the health test, a current (i_LV_batt) is taken from the LV-battery (5) by the PCMC controller (22) and regulated to the required value.

13. Method according to any one of claims 4 to 12, **characterized in**

    - **that** the LV-rectifier (13) is represented by a midpoint rectifier with two active switches (20a, 20b),

- **that** the PRECHARGE mode contains a BOOST mode, wherein in the BOOST mode, the two switches (20a, 20b) are operated in a complementary manner with a duty cycle (D) greater than 0.5 and less than 1 in each case,
- **that**, as soon as one of the two switches (20a, 20b) is switched on, the GR-capacitor (7) and the HV-capacitor (12) are charged, and
- **that**, as soon as the two switches (20a, 20b) are switched off, partial turns of the tertiary turn (8c) formed by a center tap (19) of the LV-rectifier (13) are short-circuited and the GR-capacitor (7) and the HV-capacitor (12) are not charged.

14. Method of claim 13,
**characterized in**

   - **that** in the BOOST mode of the PRECHARGE mode, an ACMC controller is used to control a current flowing in a center tap (19) of the LV-rectifier,
   - **that** the ACMC controller operates with a current (i_LV_batt) provided by the LV-battery (5), and
   - **that** voltage signals (DRIVE_20a, DRIVE_20b) for controlling the switches (20a, 20b) of the LV-rectifier (13) are generated from the current (i_LV_batt).

15. Method according to any one of claims 4 to 14,
**characterized in**

   - **that** the power conversion topology (1) is operable in a CHARGE mode, wherein in the CHARGE mode, the power conversion topology (1) is connected to the utility grid (3) and the HV-battery (4) and the LV-battery (5) of the electric vehicle (2) are charged by the utility grid (3);
   - **that** the power conversion topology (1) is operable in a DRIVE mode, wherein in the DRIVE mode, the power conversion topology (1) is disconnected from the utility grid (3) and the LV-battery (5) of the electric vehicle (2) is charged by the HV-battery (4) of the electric vehicle (2);
   - **that** the power conversion topology (1) is operable in a V-TO-G mode, wherein in the V-TO-G mode, the power conversion topology (1) is connected to the utility grid (3) and the utility grid (3) draws a current from the HV-battery (4) of the electric vehicle (2).

Fig. 1

Fig. 2

Fig. 3

EP 4 339 004 A1

Fig. 4

EP 4 339 004 A1

Fig. 5

EP 4 339 004 A1

Fig. 6

EP 4 339 004 A1

Fig. 7

EP 4 339 004 A1

Fig. 8

Fig. 9

EP 4 339 004 A1

**EUROPEAN SEARCH REPORT**

Application Number

EP 22 19 5416

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2017/282747 A1 (WANG CHIH-LUN [US]) 5 October 2017 (2017-10-05) * paragraphs [0001], [0048] – [0053]; figure 7 * | 1-15 | INV. B60L1/10 H02M1/36 H02M3/335 B60L1/12 B60L53/20 B60L53/22 B60L1/14 B60L58/20 B60L58/16 |
| Y | JP 2003 116276 A (TOYOTA MOTOR CORP) 18 April 2003 (2003-04-18) * paragraph [0027]; figure 1 * | 1-15 | |
| A | DE 10 2020 007350 A1 (SEW EURODRIVE GMBH & CO [DE]) 24 June 2021 (2021-06-24) * paragraphs [0001] – [0034], [0036] – [0053]; figure 1 * | 1-15 | |
| A | EP 3 078 538 A1 (GEN ELECTRIC [US]) 12 October 2016 (2016-10-12) * paragraphs [0005] – [0007], [0009] – [0049]; figure 1 * | 1-15 | |

TECHNICAL FIELDS
SEARCHED (IPC)

B60L
H02M

The present search report has been drawn up for all claims

| Place of search | Date of completion of the search | Examiner |
|---|---|---|
| The Hague | 17 February 2023 | Goethals, Filip |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 5416

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2023

| Patent document cited in search report | | Publication date | Patent family member(s) | | Publication date |
|---|---|---|---|---|---|
| US 2017282747 | A1 | 05-10-2017 | CN | 107264302 A | 20-10-2017 |
| | | | DE | 102017105993 A1 | 05-10-2017 |
| | | | US | 2017282747 A1 | 05-10-2017 |
| JP 2003116276 | A | 18-04-2003 | NONE | | |
| DE 102020007350 | A1 | 24-06-2021 | CN | 114901508 A | 12-08-2022 |
| | | | DE | 102020007350 A1 | 24-06-2021 |
| | | | EP | 4077019 A1 | 26-10-2022 |
| | | | US | 2023021796 A1 | 26-01-2023 |
| | | | WO | 2021121656 A1 | 24-06-2021 |
| EP 3078538 | A1 | 12-10-2016 | BR | 102016007002 A2 | 25-10-2016 |
| | | | CA | 2923952 A1 | 30-09-2016 |
| | | | CN | 106160206 A | 23-11-2016 |
| | | | EP | 3078538 A1 | 12-10-2016 |
| | | | JP | 6775978 B2 | 28-10-2020 |
| | | | JP | 2016195532 A | 17-11-2016 |
| | | | KR | 20160117239 A | 10-10-2016 |
| | | | MX | 366720 B | 22-07-2019 |
| | | | US | 2016294304 A1 | 06-10-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019199964 A1